# EUROPÄISCHE PATENTSCHRIFT

(11) **EP 2 807 417 B1**
(45) Veröffentlichungstag und Bekanntmachung des Hinweises auf die Patenterteilung: **29.06.2016**
(21) Anmeldenummer: 13702320.6
(22) Anmeldetag: 21.01.2013
(51) Int. Cl.: F16L 59/18, F16L 33/22

(54) **VERFAHREN ZUR VERBINDUNG EINES ANSCHLUSSSTÜCKS MIT EINEM WÄRMEISOLIERTEN LEITUNGSROHR**
METHOD FOR CONNECTING A CONNECTION PIECE TO A THERMALLY INSULATED CONDUIT PIPE
PROCÉDÉ POUR RELIER UNE PIÈCE DE RACCORDEMENT À UN CONDUIT THERMO-ISOLÉ

(30) Priorität: 23.01.2012 CH 98122012
(43) Veröffentlichungstag der Anmeldung: 03.12.2014
(73) Patentinhaber: Brugg Rohr Ag Holding, 5200 Brugg (CH)
(72) Erfinder: SCHALLER, Werner, CH-5212 Hausen (CH)
(74) Vertreter: Schalch, Rainer
(86) Internationale Anmeldenummer: PCT/CH2013/000012
(87) Internationale Veröffentlichungsnummer: WO 2013/110204

(56) Entgegenhaltungen:
- WO-A1-2011/009598
- CA-A1- 2 615 294
- FR-A- 822 424
- GB-A- 1 270 399

## Beschreibung

### Technisches Gebiet

Die Erfindung betrifft ein Verfahren zur Verbindung eines Anschlussstücks mit einem wärmeisolierten Leitungsrohr, welches Leitungsrohr ein Innenrohr, eine das Innenrohr umgebende Dämmschicht und vorzugsweise einen äusseren Mantel umfasst, wobei das Anschlussstück einen Anschlusskörper mit einer Steckhülse aufweist, die im Innenrohr befestigt wird, wobei ein Anschlag des Anschlagkörpers an der Stirnseite des Innenrohrs zu liegen kommt und wobei von der Stirnseite des Leitungsrohrs her eine Spannhülse zwischen der Aussenwand des Innenrohrs und der Dämmschicht eingebracht wird. Ferner betrifft die Erfindung eine Anordnung aus einem wärmegedämmten Leitungsrohr und einem Anschlussstück gemäss Anspruch 4 sowie ein Anschlussstück gemäss Anspruch 12.

### Stand der Technik

Es sind wärmegedämmte Leitungsrohre bekannt, welche ein Innenrohr für das zu leitende Medium aufweisen, wobei das Innenrohr zur Wärmedämmung mit einer Dämmschicht umgeben ist. In der Regel ist ferner ein äusserer Mantel vorgesehen. Das Innenrohr kann aus Kunststoff bestehen und z.B. ein Rohr aus vernetztem Polyethylen sein. Die Dämmschicht kann aus geschäumtem Polyurethan bestehen oder aus einem anderen geschäumten Kunststoff bestehen. Der Aussenmantel besteht ebenfalls aus Kunststoff und das Leitungsrohr kann mit einer Wellung versehen sein, um seine Biegbarkeit zu verbessern, oder es kann aussen glatt sein. Ein Verfahren zur Herstellung solcher Rohre bzw. ein derartiges Rohr ist insbesondere aus EP-A 0 897 788 bekannt. Wärmeisolierte Leitungsrohre der geschilderten Art werden z.B. bei Heizwärmenetzen, Trinkwasserleitungen, Abwasserleitungen und Kälteleitungen eingesetzt.

Bei der stirnseitigen Verbindung eines Anschlussstücks mit einem solchen Leitungsrohr oder mit einem ähnlichen wärmeisolierten Leitungsrohr, wird einerseits so vorgegangen, dass im Verbindungsbereich der Aussenmantel und die Wärmeisolation entfernt werden, wodurch das Innenrohr freigelegt wird. Dann wird eine Hülse des Anschlussstücks im Innenrohr befestigt, wozu eine Vielzahl von Vorgehensweisen bzw. Ausgestaltungen von Anschlussstücken zur Verfügung stehen. Dieses bekannte Vorgehen ist aufwändig. Der von der Wärmeisolation befreite Teil des Innerohrs muss später wieder isoliert werden, wobei er bekanntermassen in einer Schale angeordnet wird, die dann mit einem wärmedämmenden Material ausgeschäumt wird. In der WO 2011/009598 wird vorgeschlagen, dass eine Steckhülse des Anschlussstücks in das Innenrohr eingesteckt wird und dass von aussen am Innenrohr ein Kalibrierring eingeschlagen wird. Es zeigt sich, dass dieses Vorgehen bei Leitungsrohren mit nicht genau senkrecht zur Rohrlängsachse stehender Stirnfläche keine optimalen Ergebnisse ergibt. Aus CA 2 615 294 A1 ist ein Anschlussstück bekannt, welches zur Verbindung von ineinander geschobenen Metallrohren für Hochdruckleitungen dient und einen in einer Nut des einen Rohrs befestigten Haltering und eine an einem Aussengewinde des anderen Rohrs befestigte Überwurfmutter aus Metall aufweist, die sich an dem Haltering abstützt. Aus GB 1 270 399 ist ein Anschlussstück zur Verbindung von Rohren für die Anwendung bei Flugzeugen bekannt, wobei das eine Rohr verformt wird, um in eine äussere Hülse eingeformt zu werden und das andere Rohr ebenfalls in eine Hülse eingeformt wird, die ein Aussengewinde trägt und wobei ferner eine Überwurfmutter vorgesehen ist, die an der einen Hülse angreift und an der anderen Hülse aufgeschraubt wird.

### Darstellung der Erfindung

Der Erfindung liegt die Aufgabe zu Grunde, ein weiteres Verfahren für das Anschliessen eines Anschlussstücks an einem wärmeisolierten Leitungsrohr zu schaffen, welches insbesondere für nicht genau senkrecht zur Rohrlängsachse abgelängte Leitungsrohre geeignet ist.

Dies wird bei dem eingangs genannten Verfahren dadurch erreicht, dass der Anschlusskörper einen Haltering trägt, der an seinem einen Ende einen zweiten Anschlag für die Stirnseite des Leitungsrohrs bildet und der an seinem anderen Ende am Anschlusskörper befestigt ist, dass die Spannhülse ein Innengewinde und einen hinteren Kragen aufweist und den Haltering übergreift, und dass die Spannhülse am Innenrohr aufgeschraubt wird, bis der hintere Kragen den zweiten Anschlag beaufschlagt.

Dadurch, dass der Anschlusskörper von der Spannhülse indirekt mittels des Halterings an das Innenrohr angepresst wird, ergibt sich, durch die Elastizität des Halterings bedingt, eine gute Anpassung des Anschlusskörpers an die Stirnseite des Innenrohrs. Zudem ergibt sich der Vorteil der Spannhülse, die eine Umfangsspannung bzw. Radialkraft auf das Innenrohr bewirkt, so dass die Steckhülse fixiert wird. Somit kann mit der Spannhülse auch eine kreiszylindrische Form des Innenrohrs im Verbindungsbereich erzwungen werden, was die Dichtheit der Verbindung fördert, wobei das Innenrohr dazu nicht freigelegt werden muss. Die Isolationsschicht und der Mantel bleiben somit im Verbindungsbereich erhalten bzw. die Arbeitsschritte zu deren Entfernung entfallen. Die Steckhülse des Anschlussstücks ist somit in einem im Wesentlichen genau kreiszylindrischen Innenrohr befestigt bzw. dichtend festgelegt. Die Spannhülse nimmt dabei die radiale Kraft der Steckhülse auf das Innenrohr auf.

Bei einer bevorzugten Ausführung bildet der Haltering zudem einen Indikator, der die Feststellung erlaubt, ob die Spannhülse weit genug in das Leitungsrohr eingeführt bzw. auf das Innenrohr aufgeschraubt worden ist. Vorzugsweise ist der Haltering aus Kunststoff gebildet und vorzugsweise sind auch die anderen Teile des Anschlusskörpers aus Kunststoff gebildet. Bei einer weiteren bevorzugten Ausführung ist die Steckhülse mit mehreren umlaufenden äusseren Rippen versehen, welche entlang ihres Umfangs einen wechselnden Abstand vom vorderen Ende der Steckhülse haben. Allenfalls sind, zusätzlich oder statt der Rippen andere Ausformungen, wie Noppen oder Spitzen, vorgesehen. Die Rippen bilden einerseits Dichtungen für das im Innenrohr transportierte Fluid. Andererseits bilden sie eine Verdrehsicherung gegen ein Verdrehen des Anschlussstücks und des Innenrohrs, was auch die Funktion der anderen Ausformungen ist. Zudem erleichtert die Ausbildung der Rippen das Einführen der Steckhülse in das Innenrohr.

Weiter betrifft die Erfindung die Aufgabe eine Anordnung aus einem wärmegedämmten Leitungsrohr und einem Anschlussstück zu schaffen.

Dies wird mit einer Anordnung mit den kennzeichnenden Merkmalen des Anspruchs 4 erreicht.

Dadurch, dass der Anschlusskörper mit seinem Anschlag indirekt über den Haltering gegen die Stirnseite des Innenrohrs gepresst wird, ergibt sich infolge der Elastizität des Halterings eine bessere Anpassung an die Lage der Stirnseite des Innenrohrs. Die Ausbildung der Spannhülse mit einem Innengewinde erlaubt ein Aufschrauben auf das Innenrohr, was ein gleichmässigeres - und von der Anpresskraft des Anschlusskörpers an das Innenrohr her genaueres - Befestigen des Anschlussstücks erlaubt. Zugleich ergibt die Spannhülse den Vorteil der Kalibrierung des Innenrohrs, so dass die Steckhülse gleichmässig und mit guter Abdichtung anliegen kann. Diese Vorteile gelten auch für das Verfahren von Anspruch 1.

Bevorzugt ist die Steckhülse einstückig mit dem Anschlusskörper ausgeführt und das Befestigungsmittel des Halterings ist ein Befestigungsflansch, der in eine Nut im Anschlusskörper eingreift. Beide Massnahmen, ob einzeln oder zusammen verwirklicht, ergeben eine besonders einfache Konstruktion. Weiter ist es bevorzugt, dass der Haltering einen Indikator bildet, insbesondere durch eine vom Anschlusskörper abweichende Farbe des Halterings, durch welchen eine korrekte bzw. für die Verbindung genügend weite Einschraubung der Spannhülse in das Leitungsrohr anzeigbar ist. Dies erlaubt der Person, die die Verbindung von Leitungsrohr und Anschlussstück ausführt, auf einfache Weise die Feststellung, dass sie die Spannhülse so eingeschraubt hat, dass die Verbindung genügend fest erstellt ist. Bevorzugt ist weiter, dass die Rippen entlang ihres Umfangs einen wechselnden Abstand vom vorderen Ende der Steckhülse haben, was die obengenannten Vorteile bildet. Weiter ist es bevorzugt, dass die Spannhülse mindestens ein Angriffsmittel für den formschlüssigen Angriff eines Werkzeugs aufweist, was die Einschraubung der Spannhülse auf dem Innenrohr und zwischen diesem und der Wärmedämmung mit einem geeigneten Werkzeug erlaubt.

Der Erfindung liegt weiter die Aufgabe zugrunde ein verbessertes Anschlussstück zu schaffen. Diese Aufgabe wird mit einem Anschlussstück nach Anspruch 12 gelöst.

### Kurze Darstellung der Zeichnungen

Im Folgenden werden Ausführungsbeispiele der Erfindung anhand der Zeichnungen näher erläutert. Dabei zeigt
Figur 1 eine Schnittansicht durch das Ende eines Leitungsrohrs mit einem daran gemäss einer Ausführungsform der Erfindung befestigten Anschlussstück vor dem vollständigen Aufschrauben der Spannhülse auf das Innenrohr;
Figur 2 eine Schnittansicht gemäss Figur 1 mit vollständig aufgeschraubter Spannhülse;
Figur 3 eine schaubildliche Ansicht der Steckhülse des Anschlusskörpers mit Rippen; und
Figur 4 eine schaubildliche Ansicht der Spannhülse mit dem Innengewinde sowie mit einem an der Spannhülse angreifendem Werkzeug.

### Wege zur Ausführung der Erfindung

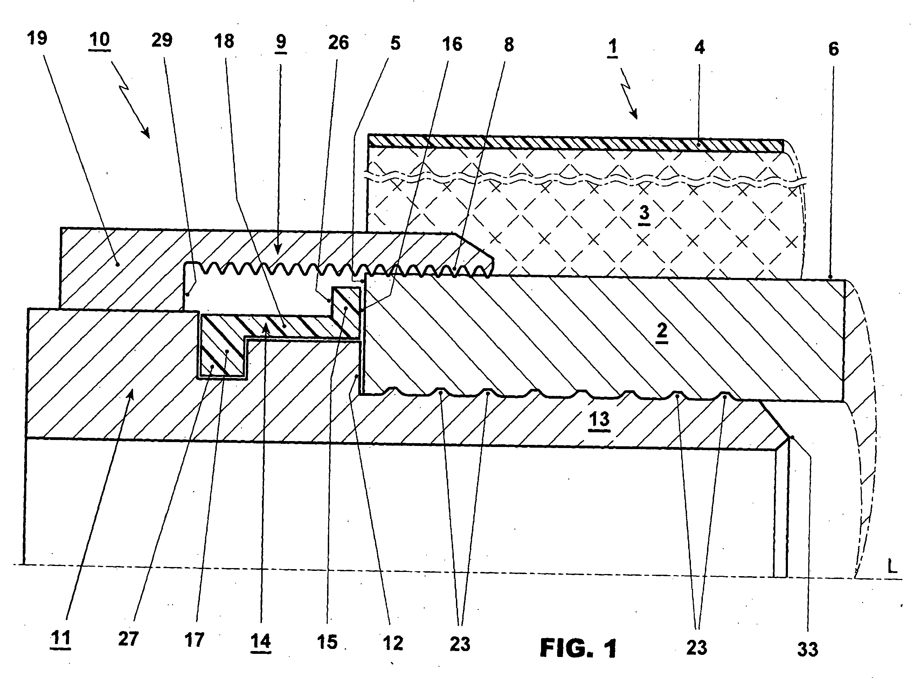

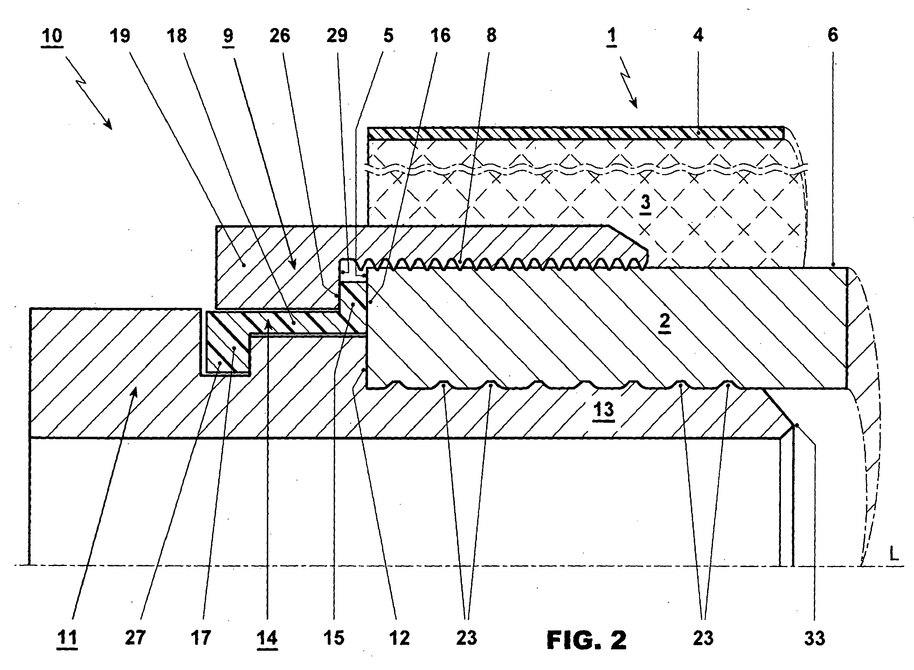

Die Figuren 1 und 2 zeigen eine Schnittdarstellung durch den Endbereich eines Leitungsrohrs, wobei die Längsachse L des Leitungsrohrs in der Schnittebene liegt. Zur Vereinfachung der Figur ist nur der Teil des rotationssymmetrischen Leitungsrohrs und des im Verbindungsbereich im Wesentlichen rotationssymmetrischen Anschlussstücks oberhalb der Längsachse L dargestellt. Das Anschlussstück kann eine beliebige bekannte Ausführung bzw. Funktion als Rohrkupplung oder Armatur oder als Fitting haben und ausserhalb seines dargestellten Verbindungsbereichs mit dem Leitungsrohr entsprechend ausgestaltet sein. Insbesondere kann das Anschlussstück am anderen Ende gleich ausgestaltet sein wie am dargestellten Ende. Das Leitungsrohr weist jeweils eine das Innenrohr umgebende Wärmedämmung (nicht in voller Dicke dargestellt) und bevorzugt einen Aussenmantel auf. Insbesondere sind die Wärmedämmung und der Aussenmantel gewellt. Ein solches Leitungsrohr kann insbesondere gemäss EP-A 897 788 ausgebildet sein bzw. hergestellt werden.

Das Leitungsrohr 1 ist mit dem Aussenmantel 4 aus Kunststoff und der geschäumten Wärmedämmung bzw. Isolationsschicht 3, die vorzugsweise aus einem Polyurethanschaum gebildet ist, ausgeführt. Die Wärmedämmung umgibt das Innenrohr 2 und liegt an dessen Aussenwand 6 an. Um die Zeichnung zu vereinfachen, ist das Leitungsrohr nicht als Wellrohr, sondern als glattes Rohr dargestellt. Das Verfahren bzw. das Anschlussstück kann bei beiden Arten von Rohren verwendet werden. Am Ende des Leitungsrohrs 1 wird ein Anschlussstück 10 auf die nachfolgend beschriebene Weise befestigt. Das Anschlussstück 10 weist einen Anschlusskörper 11 auf, der mit einer Steckhülse 13 versehen ist, die zum Einstecken in das Innenrohr 2 des Leitungsrohrs ausgeführt ist. Somit ist der Aussendurchmesser der Steckhülse an den Innendurchmesser des Innenrohrs 2 angepasst, so dass ein genau passendes Einstecken erfolgen kann und die Steckhülse eine fluiddichte Verbindung mit der Innenwand des Innenrohrs erzielt. In der gezeigten bevorzugten Ausführung weist die Steckhülse 13 Rippen 23 auf, was noch erläutert wird. Die Steckhülse könnte zusätzlich oder stattdessen mit anderen Dichtungsmitteln versehen sein, so insbesondere mit mindestens einem O-Ring.

Anschliessend an die Steckhülse 13 weist der Anschlusskörper 11 einen Anschlag 12 auf, der bei vollständig eingesteckter Steckhülse 13 an der Stirnseite 5 des Innenrohrs 2 zur Anlage kommt. Auf dem Anschlusskörper 11 ist ein Haltering 14 angeordnet, der insbesondere die im Querschnitt der Figuren 1 und 2 ersichtliche liegende Z-Form aufweist. Der Haltering 14 bildet einen zweiten Anschlag 15 für die Stirnseite des Innenrohrs 2 und liegt mit der Anschlagfläche 16 an der Stirnseite 5 an, wenn die Verbindung zwischen Leitungsrohr und Anschlussstück erfolgt ist. Der Anschlag 15 des Halterings 14 ist z.B. als durchgehender ringförmiger Flansch ausgeführt, könnte aber auch Unterbrechungen aufweisen. In der Stellung von Figur 1 liegt die Anschlagfläche 16 des Anschlags 15 noch nicht eng an der Stirnfläche 5 des Innenrohrs 2 an, sondern ist davon noch geringfügig beabstandet. In der der Stellung von Figur 2 ergibt sich dann ein Anliegen der Fläche 16 des Anschlags 15 an der Stirnfläche 5 des Innenrohrs 2. Der Haltering ist an seinem anderen, vom Anschlag 15 abgewandten Ende 17 am Anschlusskörper 11 befestigt. In dem gezeigten Beispiel ist diese Befestigung derart ausgeführt, dass ein Flansch 27 des Halterings 14 in eine entsprechend ausgeführte Nut im Anschlusskörper 11 eingreift, wie dies in den Figuren 1 und 2 ersichtlich ist. Dieser Flansch 27 kann ebenfalls ringförmig und durchgehend ausgebildet sein, könnte aber auch Unterbrechungen aufweisen. Die Befestigung des Endes 17 des Halterings am Anschlusskörper 10 kann aber auch durch Schrauben, Nieten, Kleben oder Schweissen erfolgen. Zwischen dem Anschlag 15 und dem Flansch 27 bzw. dem Ende 17 des Halterings 14 erstreckt sich ein ringförmiger Halteringteil 18, der unterbrechungslos oder auch mit Unterbrechungen ausgeführt sein kann und der nicht starr mit dem Anschlusskörper 11 verbunden ist und sich somit unter Zug ausdehnen kann. Dieser Teil muss auch nicht direkt auf dem Anschlusskörper 11 aufliegen. Die Haltering 14 ist vorzugsweise aus einem Kunststoff gefertigt.

Über dem Haltering 14 ist auf dem Anschlusskörper 11 eine Spannhülse 9 angeordnet. Diese weist einen Hülsenteil mit einem Innengewinde 8 auf. Dieses Innengewinde ist an den Aussendurchmesser des Innenrohrs 2 angepasst, so dass ein Aufschrauben der Spannhülse auf das Innenrohr erfolgen kann. Das Innengewinde weist dabei eine Ausgestaltung auf, insbesondere eine Abrundung der Gewindegänge, die einem Einwalzen der Gewindegänge auf der Aussenhaut des Innenrohrs förderlich ist und dabei ein Einschneiden der Aussenhaut des Innenrohrs 2 möglichst vermeidet. Somit wird eine Verletzung des Innenrohrs 2 möglichst vermieden. Am hinteren Ende (in Einschraubrichtung gesehen) der Spannhülse 9 ist ein im Wesentlichen ringförmiger Kragen 19 vorgesehen, welcher auf dem Anschlusskörper 11 aufliegt. An diesem Ende der Spannhülse 9 ist ferner ein Angriffsmittel für ein Werkzeug vorgesehen, was noch erläutert wird, damit die Hülse 9 mit Hilfe des Werkzeugs auf das Innenrohr aufgeschraubt werden kann.

In Figur 1 ist dargestellt, dass die Steckhülse 13 in das Innenrohr 2 eingeschoben worden ist. Die Spannhülse 9 ist bereits zum Teil auf das Innenrohr 2 aufgeschraubt worden. Sie verdrängt dabei die wärmedämmende Isolation 3 des Leitungsrohrs. Dies kann durch eine spezielle Ausgestaltung der Spannhülse erleichtert werden, welche später noch erläutert wird. Die Spannhülse 9 wird weiter aufgeschraubt, bis deren Kragen 19 mit seiner Anschlagfläche 29 an der Anschlagfläche 26 des Anschlags 15 des Halterings 14 zum Anliegen kommt. Wird die Spannhülse 9 noch etwas weiter auf das Innenrohr 2 aufgeschraubt, so wird durch die Spannhülse 9 der Anschlag 15 gegen die Stirnseite 5 des Innenrohrs 2 gepresst und der zuvor erwähnte geringfügige Abstand zwischen der Anschlagfläche 16 und der Stirnfläche 5 wird geschlossen. Dies ist in Figur 2 ersichtlich. Damit wird der Haltering 14 in seinem Bereich 18 elastisch verformt und über die Befestigung des Halterings 14 mit seinem Ende 17 am Anschlusskörper 11 wird auch der Anschlusskörper 11 mit seinem Anschlag gegen die Stirnfläche 5 des Innenrohrs gepresst.

Bevorzugt ist dabei, dass die Dimensionierung des Halterings 14 und des Kragens 19 der Spannhülse so gewählt ist, dass bei vollständig aufgeschraubter Spannhülse der Haltering 14 mit seinem Ende 17 von aussen sichtbar wird, was - wie in Figur 2 ersichtlich ist - der Fall ist, wenn der Kragen 19 das Ende überfahren hat. Der Haltering wirkt somit als Indikator für die korrekt ausgeführte Verbindung des Anschlussstücks 10 mit dem Leitungsrohr 1. Die Indikatorwirkung kann verbessert werden, wenn der Haltering 14 eine vom Anschlusskörper 11 abweichende Farbe hat.

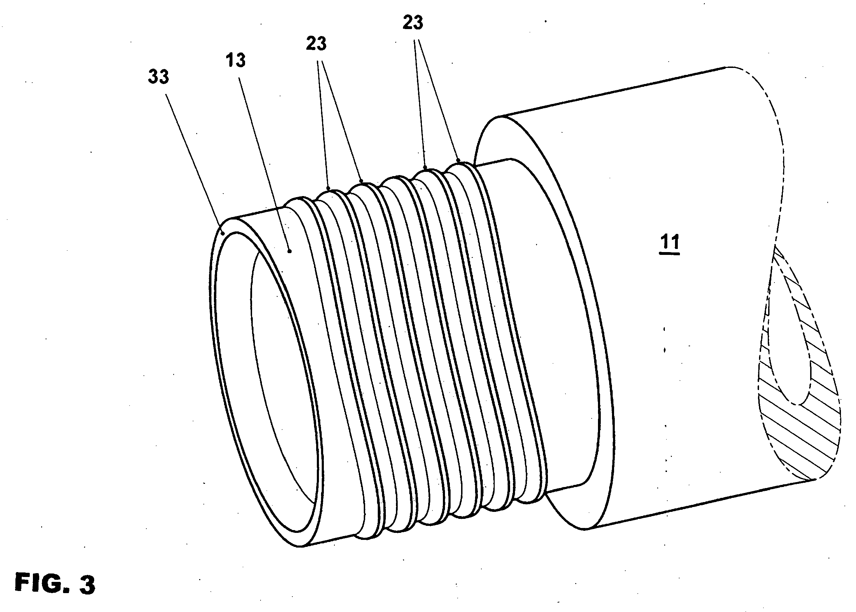

Figur 3 zeigt den Anschlusskörper 11 in stark vereinfachter Form, um zu erläutern, dass auf der Steckhülse 13 Rippen 23 vorgesehen sein können. Diese Rippen 23 sind umlaufende Erhebungen an der Steckhülse, welche in Figur 3 für die bessere Darstellung überhöht dargestellt sind. Die Rippen dienen einerseits der Fluiddichtigkeit des Anschlussstücks, indem sie sich in die Innenwand des Innenrohrs einpressen, wenn die Spannhülse über das Innenrohr vorgeschoben bzw. auf das Innenrohr aufgeschraubt wird. Ferner dienen sie als Verdrehsicherung für das Anschlussstück. Dies insbesondere, wenn sie entlang ihres Umfangs verschiedenen Abstand vom vorderen Ende 33 der Steckhülse 13 haben. Die in Figur 3 dargestellte Ausführung ist dabei als ein Beispiel zu verstehen, der Verlauf dieser Rippen kann auf verschiedene Weise gewählt werden. Der verschieden grosse Abstand der Rippen 23 vom Ende 33 erleichtert auch das Einstecken oder Eindrehen oder Einschlagen der Steckhülse 13 in das Innenrohr 2. Es können weitere Ausformungen an der Steckhülse 13 vorgesehen sein, die an der Innenseite des Innenrohrs angreifen und die Verdrehsicherung verbessern, z.B. noppenförmige oder spitzenförmige Ausformungen.

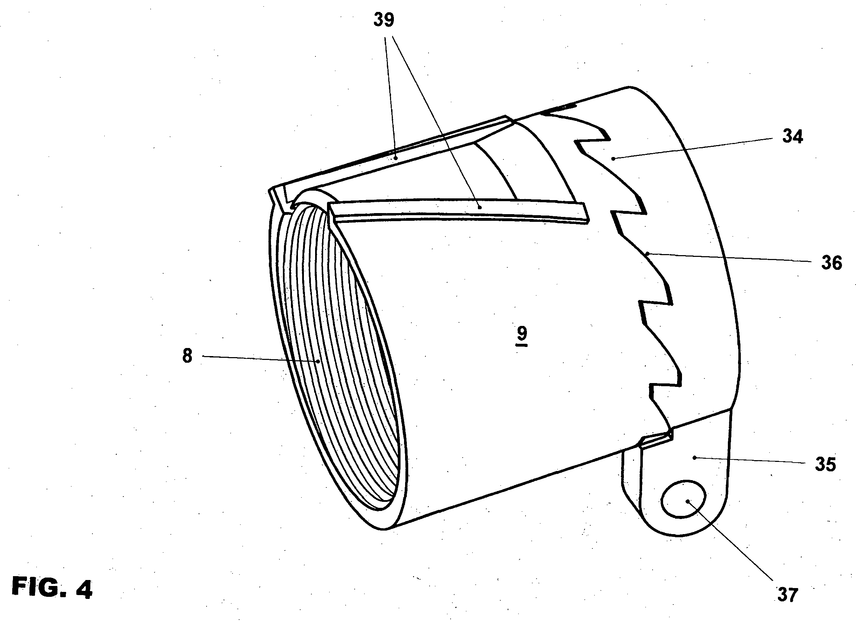

Figur 4 zeigt ein Beispiel der Spannhülse 9, bei welchem diese Schneidmittel 39 aufweist, welche die wärmedämmende Isolation 3 schneiden, wenn die Spannhülse auf das Innenrohr 2 aufgeschraubt wird. Dadurch wird das Aufschrauben erleichtert. Ferner zeigt Figur 4 ein Beispiel des Eingriffsmittels an der Spannhülse, welches in diesem Fall aus einer Verzahnung 34 besteht, an welcher ein entsprechendes Werkzeug 35 mit einer Gegenzahnung 36 angesetzt werden kann. Dieses Werkzeug weist ferner Aufnahmen 37 (nur eine ist in der Figur 4 sichtbar) auf, in die ein Betätigungsglied eingeführt werden kann, um die Spannhülse 9 zum Aufschrauben zu drehen. Natürlich kann die Ausgestaltung des Werkzeugs auch so sein, dass das Aufschrauben der Spannhülse 9 motorisch erfolgen kann.

Zusammenfassend kann gesagt werden, dass zur Verbindung eines Anschlussstücks 10, das z.B. eine Rohrkupplung oder eine Armatur oder ein Fitting ist, mit einem wärmegedämmten Leitungsrohr 1, eine Spannhülse 9 mit einem Innengewinde 8 zwischen das Innenrohr 2 des Leitungsrohrs und dessen Isolationsschicht 3 eingeschraubt wird. Zuvor wird ein Anschlusskörper 11 mit einer Steckhülse 13 im Innenrohr angeordnet. Die Spannhülse 9 wirkt indirekt über einen Haltering 14 auf das Anschlussstück 11 um dieses gegen die Stirnseite 5 des Innenrohrs 2 zu pressen. Auf diese Weise entfällt die Entfernung der Isolationsschicht 3 und des Mantels 4 des Leitungsrohrs. Auch können Ungenauigkeiten der Ablängung des Leitungsrohrs besser kompensiert werden.

## Patentansprüche

1. Verfahren zur Verbindung eines Anschlussstücks (10) mit einem wärmeisolierten Leitungsrohr (1), welches ein Innenrohr (2), eine das Innenrohr (2) umgebende Dämmschicht (3) und vorzugsweise einen äusseren Mantel (4) umfasst, wobei das Anschlussstück (10) einen Anschlusskörper (11) mit einer Steckhülse (13) aufweist, die im Innenrohr befestigt wird, wobei ein Anschlag (12) des Anschlusskörpers (11) an der Stirnseite (5) des Innenrohrs (2) zu liegen kommt und wobei von der Stirnseite des Leitungsrohrs her eine Spannhülse (9) zwischen der Aussenwand (6) des Innenrohrs (2) und der Dämmschicht (3) eingebracht wird, **dadurch gekennzeichnet, dass** der Anschlusskörper (11) einen Haltering (14) trägt, der an seinem einen Ende einen zweiten Anschlag (15) für die Stirnseite (5) des Leitungsrohrs bildet und der an seinem anderen Ende (17) am Anschlusskörper (11) befestigt ist, dass die Spannhülse (9) den Haltering (14) übergreift und ein Innengewinde (8) und einen hinteren Kragen (19) aufweist, und dass die Spannhülse (9) am Innenrohr (2) aufgeschraubt wird, bis der hintere Kragen (19) den zweiten Anschlag (15) beaufschlagt.

2. Verfahren nach Anspruch 1, **dadurch gekennzeichnet, dass** der Haltering (14) einen Indikator bildet, indem das andere Ende (17) des Halterings (14) ersichtlich wird, wenn die Spannhülse (9) genügend weit auf das Innenrohr (2) aufgeschraubt ist.

3. Verfahren nach Anspruch 1 oder 2, **dadurch gekennzeichnet, dass** die Steckhülse (13) mehrere umlaufende äussere Rippen (23) aufweist, welche entlang ihres Umfangs einen wechselnden Abstand vom vorderen Ende (33) der Steckhülse haben.

4. Anordnung aus einem wärmegedämmten Leitungsrohr (1) mit einem Innenrohr (2) und einer Dämmschicht (3), und vorzugsweise mit einem Aussenmantel (4), und einem Anschlussstück (10) welches zur Verbindung mit dem wärmegedämmten Leitungsrohr (1) bestimmt und ausgeführt ist, welches Leitungsrohr mit einem Innenrohr (2) und einer Dämmschicht (3) versehen ist, wobei das Anschlussstück (10) einen Anschlusskörper (11) aufweist, der mit einem ersten, zur Anlage an der Stirnseite (5) des Leitungsrohrs bestimmten Anschlag (12) versehen ist, der an einer zum Einführen in das Innenrohr (2) bestimmten Steckhülse (13) des Anschlusskörpers anschliesst, **dadurch gekennzeichnet, dass** das Anschlussstück weiter einen auf dem Anschlusskörper (11) angeordneten Haltering (14) aufweist, der an seinem einen Ende einen zweiten Anschlag (15) mit einer Anschlagfläche (16) für die Stirnseite (5) des Innenrohrs aufweist und der an seinem anderen Ende (17) ein Befestigungsmittel (27) aufweist, mittels welchem der Haltering (14) am Anschlusskörper (11) befestigt ist, und dass das Anschlussstück eine Spannhülse (9) mit einem Innengewinde (8) aufweist, welche den Haltering (14) übergreift, und dass die Spannhülse (9) an ihrem hinteren Ende einen Kragen (19) mit einer Anlagefläche (29) aufweist, die zur Anlage an einer Gegenfläche (26) des zweiten Anschlags (15) bestimmt ist.

5. Anordnung nach Anspruch 4, **dadurch gekennzeichnet, dass** die Steckhülse (13) einstückig mit dem Anschlusskörper (11) ausgeführt ist.

6. Anordnung nach Anspruch 4 oder 5, **dadurch gekennzeichnet, dass** das Befestigungsmittel des Halterings (14) ein Befestigungsflansch (27) ist, der in eine Nut im Anschlusskörper (11) eingreift.

7. Anordnung nach einem der Ansprüche 4 bis 6, **dadurch gekennzeichnet, dass** der Haltering (14) einen Indikator bildet, insbesondere durch eine vom Anschlusskörper (11) abweichende Farbe des Halterings, durch welchen eine genügenden Einschraubung der Spannhülse in das Leitungsrohr anzeigbar ist.

8. Anordnung nach einem der Ansprüche 4 bis 7, **dadurch gekennzeichnet, dass** die Steckhülse (13) mehrere umlaufende äussere Rippen (23) aufweist, welche entlang ihres Umfangs einen wechselnden Abstand vom vorderen Ende (33) der Steckhülse haben.

9. Anordnung nach einem der Ansprüche 4 bis 8, **dadurch gekennzeichnet, dass** die Spannhülse (9) mindestens ein Angriffsmittel für den formschlüssigen Angriff eines Werkzeugs aufweist.

10. Anordnung nach einem der Ansprüche 4 bis 9, **dadurch gekennzeichnet, dass** die Spannhülse (9) an ihrer Aussenseite im Bereich des Innengewindes (8) mindestens ein Verdrängungsmittel, insbesondere ein Schneidmittel (39), zur Verdrängung der wärmedämmenden Isolation (3) des Leitungsrohrs (1) aufweist.

11. Anordnung nach Anspruch 10, wobei das Leitungsrohr ein Wellrohr ist.

12. Anschlussstück (10) aus Kunststoff, welches eine Rohrkupplung, eine Armatur oder ein Fitting ist und welches zur Durchführung des Verfahrens nach einem der Ansprüche 1 bis 3 und somit zur Verbindung mit einem wärmegedämmten Leitungsrohr (1) bestimmt und ausgeführt ist, welches Leitungsrohr mit einem Innenrohr (2) und einer Dämmschicht (3) versehen ist, wobei das Anschlussstück (10) einen Anschlusskörper (11) aufweist, der mit einem ersten, zur Anlage an der Stirnseite (5) des Leitungsrohrs bestimmten Anschlag (12) versehen ist, der an einer zum Einführen in das Innenrohr (2) bestimmten Steckhülse (13) des Anschlusskörpers anschliesst, **dadurch gekennzeichnet, dass** das Anschlussstück weiter einen auf dem Anschlusskörper (11) angeordneten Haltering (14) aufweist, der an seinem einen Ende einen zweiten Anschlag (15) mit einer Anschlagfläche (16) für die Stirnseite (5) des Innenrohrs aufweist und der an seinem anderen Ende (17) ein Befestigungsmittel (27) aufweist, mittels welchem der Haltering (14) am Anschlusskörper (11) befestigt ist, und dass das Anschlussstück eine Spannhülse (9) mit einem Innengewinde (8) aufweist, welche den Haltering (14) übergreift, und dass die Spannhülse (9) an ihrem hinteren Ende einen Kragen (19) mit einer Anlagefläche (29) aufweist, die zur Anlage an einer Gegenfläche (26) des weiteren Anschlags (15) bestimmt ist.

13. Anschlussstück nach Anspruch 12, **dadurch gekennzeichnet, dass** die Steckhülse (13) einstückig mit dem Anschlusskörper (11) ausgeführt ist.

14. Anschlussstück nach Anspruch 12 oder 13, **dadurch gekennzeichnet, dass** das Befestigungsmittel des Halterings (14) ein Befestigungsflansch (27) ist, der in eine Nut im Anschlusskörper (11) eingreift.

15. Anschlussstück nach einem der Ansprüche 12 bis 14, **dadurch gekennzeichnet, dass** der Haltering (14) einen Indikator bildet, insbesondere durch eine vom Anschlusskörper (11) abweichende Farbe des Halterings, durch welchen eine genügenden Einschraubung der Spannhülse in das Leitungsrohr anzeigbar ist.

16. Anschlussstück nach einem der Ansprüche 12 bis 15, **dadurch gekennzeichnet, dass** die Steckhülse (13) mehrere umlaufende äussere Rippen (23) aufweist, welche entlang ihres Umfangs einen wechselnden Abstand vom vorderen Ende (33) der Steckhülse haben.

17. Anschlussstück nach einem der Ansprüche 12 bis 16, **dadurch gekennzeichnet, dass** die Spannhülse (9) mindestens ein Angriffsmittel für den formschlüssigen Angriff eines Werkzeugs aufweist.

18. Anschlussstück nach einem der Ansprüche 12 bis 17, **dadurch gekennzeichnet, dass** die Spannhülse (9) an ihrer Aussenseite im Bereich des Innengewindes (8) mindestens ein Verdrängungsmittel, insbesondere ein Schneidmittel (39), zur Verdrängung der wärmedämmenden Isolation (3) des Leitungsrohrs (1) aufweist.

## Claims

1. Method for connecting a connection piece (10) to a thermally insulating conduit pipe (1) comprising an internal pipe (2), an insulating layer (3) enclosing the internal pipe (2), and preferably an external casing (4), wherein the connection piece (10) has a connection body (11) with a plug sleeve (13) that is attached in the internal pipe, wherein a stop (12) of the connection body (11) comes to rest against the end face (5) of the internal pipe (2), and wherein a clamping sleeve (9) is introduced from the end face of the internal pipe between the outer wall (6) of the internal pipe (2) and the insulating layer (3), **characterized in that** the connection body (11) bears a retaining ring (14) that forms on one of its ends a second stop (15) for the end face (5) of the internal pipe and that is attached at its other end (17) to the connection body (11), that the clamping sleeve (9) extends over the retaining ring (14) and has an internal thread (8) and a rear collar (19), and that the clamping sleeve (9) is screwed onto the internal pipe (2) until the rear collar (19) abuts the second stop (15).

2. Method as set forth in claim 1, **characterized in that** the retaining ring (14) constitutes an indicator **in that** the other end (17) of the retaining ring (14) becomes visible when the clamping sleeve (9) is screwed sufficiently onto the internal pipe (2).

3. Method as set forth in claim 1 or 2, **characterized in that** the plug sleeve (13) has several circumferential external ribs (23) that are spaced from the front end (33) of the plug sleeve at alternating distances along its periphery.

4. Arrangement of a thermally insulating conduit pipe (1) with an internal pipe (2) and an insulating layer (3), and preferably with an external casing (4), and a connection piece which is intended and designed to connect to a thermally insulated conduit pipe (1), which conduit pipe is provided with an internal pipe (2) and an insulating layer (3), the connection piece (10) having a connection body (11) that is provided with a first stop (12) intended to rest against the end face (5) of the conduit pipe, and the stop being adjacent to a plug sleeve (13) of the connection body intended for insertion into the internal pipe (2), **characterized in that** the connection piece also has a retaining ring (14) arranged on the connection body (11) that has, on one end, a second stop (15) with a stop face (16) for the end face (5) of the internal pipe and that has, at its other end (17) an attachment means (27) by means of which the retaining ring (14) is attached to the connection body (11), and **in that** the connection piece has a clamping sleeve (9) with an internal thread (8), extending over the retaining ring (14), and **in that** the clamping sleeve (9) has a collar (19) at its rear end with a bearing face (29) that is intended to rest against a mating face (26) of the other stop (15).

5. Arrangement as set forth in claim 4, **characterized in that** the plug sleeve (13) is embodied integrally with the connection body (11).

6. Arrangement as set forth in claim 4 or 5, **characterized in that** the attachment means of the retaining ring (14) is an attachment flange (27) that engages in a groove in the connection body (11).

7. Arrangement as set forth in any one of claims 4 to 6, **characterized in that** the retaining ring (14) constitutes an indicator, particularly through a color of the retaining ring that differs from the connection body (11), by means of which sufficient screwing of the clamping sleeve into the conduit pipe can be indicated.

8. Arrangement as set forth in any one of claims 4 to 7, **characterized in that** the plug sleeve (13) has several circumferential external ribs (23) that are spaced at alternating distances from the front end (33) of the plug sleeve along its periphery.

9. Arrangement as set forth in any one of claims 4 to 8, **characterized in that** the clamping sleeve (9) has at least one gripping means for the positive gripping of a tool.

10. Arrangement as set forth in any one of claims 4 to 9, **characterized in that** the clamping sleeve (9) has, on its outer side in the region of the internal thread (8), at least one means of displacement, particularly a cutting means (39) for displacing the thermally insulating insulation (3) of the conduit pipe (1).

11. Arrangement as set forth in claim 10, wherein the conduit pipe is a corrugated pipe.

12. Connection piece (10) made of plastic, being a pipe coupling or armature or fitting and which is intended and designed to execute the method as set forth in any one of claims 1 to 3 and hence to connect to a thermally insulated conduit pipe (1), which conduit pipe is provided with an internal pipe (2) and an insulating layer (3), the connection piece (10) having a connection body (11) that is provided with a first stop (12) intended to rest against the end face (5) of the conduit pipe, and the stop being adjacent to a plug sleeve (13) of the connection body intended for insertion into the internal pipe (2), **characterized in that** the connection piece also has a retaining ring (14) arranged on the connection body (11) that has, on one end, a second stop (15) with a stop face (16) for the end face (5) of the internal pipe and that has, at its other end (17), an attachment means (27) by means of which the retaining ring (14) is attached to the connection body (11), and **in that** the connection piece has a clamping sleeve (9) with an internal thread (8) that extends over the retaining ring (14), and **in that** the clamping sleeve (9) has a collar (19) with a bearing face (29) at its rear end, which is intended to rest against a mating face (26) of the other stop (15).

13. Connection piece as set forth in claim 12, **characterized in that** the plug sleeve (13) is embodied integrally with the connection body (11).

14. Connection piece as set forth in claim 12 or 13, **characterized in that** the attachment means of the retaining ring (14) is an attachment flange (27) that engages in a groove in the connection body (11).

15. Connection piece as set forth in any one of claims 12 to 14, **characterized in that** the retaining ring (14) constitutes an indicator, particularly through a color of the retaining ring that differs from the connection body (11), by means of which sufficient screwing of the clamping sleeve into the conduit pipe can be indicated.

16. Connection piece as set forth in any one of claims 12 to 15, **characterized in that** the plug sleeve (13) has several circumferential external ribs (23) that are spaced at alternating distances from the front end (33) of the plug sleeve along its periphery.

17. Connection piece as set forth in any one of claims 12 to 16, **characterized in that** the clamping sleeve (9) has at least one gripping means for the positive gripping of a tool.

18. Connection piece as set forth in any one of claims 12 to 17, **characterized in that** the clamping sleeve (9) has, on its outer side in the region of the internal thread (8), at least one means of displacement, particularly a cutting means (39), for displacing the thermally insulating insulation (3) of the conduit pipe (1).

## Revendications

1. Procédé de connexion d'une pièce de connexion (10) avec une conduite thermo-isolé (1) comprenant un tuyau intérieur (2), une couche d'isolation (3) entourant le tuyau intérieur (2) et préférablement une enveloppe extérieure (4), la pièce de connexion (10) ayant un corps de connexion (11) avec un manchon d'enfichage (13) attaché dans le tuyau intérieur, une butée (12) du corps de connexion (11) se posant à la face frontale (5) du tuyau intérieur (2) et un manchon de serrage (9) étant introduit par la face frontale du tuyau intérieur entre la paroi extérieure (6) du tuyau intérieur (2) et la couche d'isolation (3), **caractérisé en ce que** le corps de connexion (11) porte un anneau de support (14) qui forme à son extrémité une deuxième butée (15) pour la face frontale (5) de la conduite et qui est attaché avec son autre extrémité (17) au corps de connexion (11), **en ce que** le manchon de serrage (9) vient en prise sur l'anneau de support (14) et il a un taraudage (8) et une collerette arrière (19), et **en ce que** le manchon de serrage (9) est visé sur le tuyau intérieur (2) jusqu'à la collerette arrière (19) aboutit à la deuxième butée (15).

2. Procédé selon la revendication 1, **caractérisé en ce que** l'anneau de support (14) forme un indicateur en permettant à l'autre extrémité (17) de l'anneau de support (14) d'être visible quand le manchon de serrage (9) est visé suffisamment sur le tuyau intérieur (2).

3. Procédé selon la revendication 1 ou 2, **caractérisé en ce que** le manchon d'enfichage (13) a plusieurs nervures (23) qui ont une distance de l'extrémité frontale (33) du manchon d'enfichage qui change le long de son circonférence.

4. Arrangement avec une conduite thermo-isolée (1) avec un tuyau intérieur (2) et une couche d'isolation (3), et préférablement avec une enveloppe extérieure (4) et une pièce de connexion (10) qui est prévue et adaptée pour une connexion avec la conduite thermo-isolée (1), la conduite ayant un tuyau intérieur (2) et une couche d'isolation (3), la pièce de connexion (10) ayant un corps de connexion (11) avec une première butée (12) pour l'arrangement à l'extrémité frontale (5) de la conduite, qui suit un manchon d'enfichage (13) du corps de connexion, prévu pour l'introduction dans le tuyau intérieur (2), **caractérisé en ce que** la pièce de connexion a en outre un anneau de support (14) arrangé sur le corps de connexion (11), qui a du côté d'une de ses extrémités une deuxième butée (15) avec une surface de butée (16) pour le côté frontal (5) du tuyau intérieur et qui a à son autre extrémité (17) un moyen d'attachement (27), à l'aide duquel l'anneau de support (14) est attaché au corps de connexion (11), et **en ce que** la pièce de connexion a un manchon de serrage (9) avec un taraudage (8) qui vient en prise sur l'anneau de support (14) et **en ce que** le manchon de serrage (9) a une collerette arrière (19) avec une surface de butée (29), de son côté arrière, prévue pour l'arrangement à une contre-surface (26) de la deuxième butée (15).

5. Arrangement selon la revendication 4, **caractérisé en ce que** le manchon d'enfichage (13) est exécuté en une pièce avec le corps de connexion (11).

6. Arrangement selon l'une des revendications 4 ou 5, **caractérisé en ce que** le moyen d'attachement de l'anneau de support (14) est une bride de fixation (27) qui s'engage dans une rainure dans le corps de connexion (11).

7. Arrangement selon l'une des revendications 4 à 6, **caractérisé en ce que** l'anneau de support (14) forme un indicateur, particulièrement par une couleur de l'anneau de support différente du corps de connexion (11), à l'aide duquel un vissage suffisant du manchon de serrage dans la conduite est montré.

8. Arrangement selon l'une des revendications 4 à 7, **caractérisé en ce que** le manchon d'enfichage (13) a plusieurs nervures extérieures circonférentielles (23) qui ont le long de leur circonférence une distance qui change par rapport à l'extrémité frontale (33) du manchon d'enfichage.

9. Arrangement selon l'une des revendications 4 à 8, **caractérisé en ce que** le manchon de serrage (9) a au moins un moyen d'engagement pour l'engagement positif d'un outil.

10. Arrangement selon l'une des revendications 4 à 9, **caractérisé en ce que** le manchon de serrage (9) a de son côté extérieur dans la région du taraudage (8) au moins un moyen d'élimination, particulièrement un moyen de coupure (39), pour éliminer l'isolation thermo-isolante (3) de la conduite (1).

11. Arrangement selon la revendication 10, la conduite étant un tuyau ondulé.

12. Pièce de connexion (10) en plastique étant un raccord de tuyaux, un appareillage ou un fitting, prévue et exécutée pour la mise en oeuvre du procédé selon l'une des revendications 1 à 3 et par conséquent pour la connexion avec une conduite thermo-isolée (1), la conduite (1) ayant un tuyau intérieur (2) et une couche d'isolation (3), la pièce de connexion (10) ayant un corps de connexion (11) avec une première butée (12) prévue pour l'arrangement à l'extrémité frontale (5) de la conduite, qui suit un manchon d'enfichage (13) du corps de connexion, prévu pour l'introduction dans le tuyau intérieur (2), **caractérisé en ce que** la pièce de connexion a en outre un anneau de support (14) arrangé sur le corps de connexion (11), qui a du côté d'une extrémité une deuxième butée (15) avec une surface de butée (16) pour l'extrémité frontale (5) du tuyau intérieur et qui a à son autre extrémité (17) un moyen d'attachement (27), à l'aide duquel l'anneau de support (14) est attaché au corps de connexion (11), et **en ce que** la pièce de connexion a un manchon de serrage (9) avec un taraudage (8) qui vient en prise sur l'anneau de support (14) et **en ce que** le manchon de serrage (9) a une collerette arrière (19) avec une surface de butée (29), de son côté arrière, prévue pour l'arrangement à une contre-surface (26) de l'autre butée (15).

13. Pièce de connexion selon la revendication 12, **caractérisé en ce que** le manchon d'enfichage (13) est exécuté en une pièce avec le corps de connexion (11).

14. Arrangement selon l'une des revendications 12 ou 13, **caractérisé en ce que** le moyen d'attachement de l'anneau de support (14) est une bride de fixation (27) qui s'engage dans une rainure dans le corps de connexion (11).

15. Arrangement selon l'une des revendications 12 à 14, **caractérisé en ce que** l'anneau de support (14) forme un indicateur, particulièrement par une couleur de l'anneau de support différente du corps de connexion (11), à l'aide duquel un vissage suffisant du manchon de serrage dans la conduite est montré.

16. Arrangement selon l'une des revendications 12 à 15, **caractérisé en ce que** le manchon d'enfichage (13) a plusieurs nervures extérieures circonférentielles (23) qui ont le long de leur circonférence une distance qui change par rapport à l'extrémité frontale (33) du manchon d'enfichage.

17. Arrangement selon l'une des revendications 12 à 16, **caractérisé en ce que** le manchon de serrage (9) a au moins un moyen d'engagement pour l'engagement positif d'un outil.

18. Arrangement selon l'une des revendications 12 à 17, **caractérisé en ce que** le manchon de serrage (9) a de son côté extérieur dans la région du taraudage (8) au moins un moyen d'élimination, particulièrement un moyen de coupure (39), pour éliminer l'isolation thermo-isolante (3) de la conduite (1).
